**Europäisches Patentamt**

**European Patent Office**

**Office européen des brevets**

(19)

(11) Numéro de publication: **0 159 220**
**B1**

(12) # FASCICULE DE BREVET EUROPÉEN

(45) Date de publication du fascicule du brevet:
02.09.87

(51) Int. Cl.⁴: **B 29 C 47/60,** B 29 C 47/40, B 30 B 11/24

(21) Numéro de dépôt: **85400420.7**

(22) Date de dépôt: **05.03.85**

(54) **Machine à vis de traitement de matière.**

(30) Priorité: **08.03.84 FR 8403583**

(43) Date de publication de la demande:
**23.10.85 Bulletin 85/43**

(45) Mention de la délivrance du brevet:
**02.09.87 Bulletin 87/36**

(84) Etats contractants désignés:
**AT BE CH DE GB IT LI SE**

(56) Documents cité:
**DE-A-2 924 462**
**DE-B-1 110 474**
**FR-A-2 042 191**
**FR-A-2 264 628**
**FR-A-2 401 754**
**US-A-2 946 089**

(73) Titulaire: **CLEXTRAL, 15 rue Pasquier, F-75008 Paris (FR)**

(72) Inventeur: **Mourrier, Francis, 3 rue Racine, F-71400 Autun (FR)**
Inventeur: **Pelissier, Félix, 1 rue Maréchal Leclerc, F-71200 Le Creusot (FR)**

(74) Mandataire: **Moncheny, Michel, c/o Cabinet Lavoix 2 Place d'Estienne d'Orves, F-75441 Paris Cedex 09 (FR)**

EP 0 159 220 B1

LIBER, STOCKHOLM 1987

## Description

L'invention a pour objet une machine à vis de traitement de matière comprenant au moins une vis entrainée en rotation à l'intérieur d'un fourreau. L'invention s'applique spécialement aux extrudeuses à une ou plusieurs vis et, plus généralement, aux machines dans lesquelles on produit des effecs de mélange, de malaxage, de trituration et de mise en pression par passage dans le fourreau d'une matière entrainée par la rotation des vis.

Une machine à vis telle qu'une extrudeuse utilisée pour la fabrication des matières plastiques comprend un fourreau allongé enveloppant une ou plusieurs vis. Si la machine comprend une seule vis, celle-ci est placée dans un alésage cylindrique du fourreau. Dans le cas de machine à deux vis, le fourreau est muni de deux alésages cylindriques à axes parallèles dont l'entraxe est inférieur au diamètre des alésages de façon à former deux lobes sécants dans lesquels sont placées les deux vis, celles-ci engrenant l'une dans l'autre. Si les vis sont entrainées dans le même sens, elles sont identiques, en revanche elles sont symétriques si elles sont entrainées en sens contraire. A cet effet, les vis sont entrainées par un mécanisme placé à une extrémité du fourreau.

Comme il peut être intéressant de faire varier les filetages des vis, celles-ci sont parfois constituées d'éléments filetés en forme de manchons creux enfilés sur un arbre central d'entrainement de façon à former un empilage jointif solidaire de l'arbre en rotation grâce, par exemple, à des cannelures ménagées en saillie sur l'arbre et s'engageant dans des rainures correspondantes ménagées sur la paroi interne des manchons. Ceux-ci sont empilés et calés entre deux butées placées aux deux extrémités de l'arbre, généralement une butée fixe placée à une extrémité et un écrou de serrage vissé sur un filetage ménagé à l'autre extrémité de l'arbre. Grâce à cette disposition, il est possible de changer facilement un ou plusieurs éléments filetés soit pour modifier le pas des filets, soit pour remplacer un élément usagé.

La matière entrainée dans les vis est généralement mise en pression et a donc tendance à écarter les éléments adjacents et à s'infiltrer entre eux. Elle peut alors parvenir jusqu'aux cannelures et éventuellement se durcir. Le démontage des éléments devient alors difficile et il faut nettoyer l'arbre cannelé chaque fois que l'on change des éléments, cette opération pouvant être assez longue. On a tenté d'y remédier en plaçant des joints d'étanchéité entre les éléments filetes mais l'expérience montre, quand les pressions sont importantes que l'on parvient difficilement à éviter cet inconvénient. En effet l'écrou de serrage est utilisé uniquement pour solidariser les éléments entre eux et, comme il doit être facilement démonté, il ne peut exercer une pression suffisante pour s'opposer à coup sûr à un écartement des éléments permettant l'infiltration de matière.

Par ailleurs, les arbres des vis doivent évidemment être maintenus dans des paliers. Lorsque la machine est une extrudeuse munie de filières à son extrémité aval, les vis sont maintenues par des paliers situés uniquement du côté de l'entraînement. A leur autre extrémité, elles sont maintenues centrées par rapport au fourreau par la pression de la matière extrudée. Dans d'autres applications, la machine ne fonctionne pas en extrudeuse mais, par exemple, en mélangeur malaxeur. La matière peut ne pas être mise sous pression à l'extrémité aval et être évacuée par un orifice latéral du fourreau. Dans ce cas, il est plus normal de faire porter chaque vis par deux paliers placés à ses deux extrémités. Toutefois, dans certains processus de traitement, il est courant de faire passer la matière par des zones de mise en pression réparties le long de l'arbre et constituées par exemple par des zones de freinage comportant des filets à pas resserrés ou inversés. Dans ce cas, la pression de la matière dans la zone d'engrènement des vis produit un effort d'écartement de celles-ci qui sont ainsi soumises à des contraintes de flexion. Il en résulte, dans la partie centrale, une flèche dont on admet souvent qu'elle peut atteindre trois fois le jeu radial des vis. De ce fait, les éléments filetés sont soumis dans la section d'engrènement à des contraintes axiales de compression importante et tendent au contraire à s'écarter l'un de l'autre sur la périphérie. Ce désaxement de l'effort axial de compression peut entraîner un effet de matage des faces d'appui des éléments. En outre en raison de cette légère flexion des vis, les filetages ne s'usent pas régulièrement.

On connaît dans le FR-A-2 042 191 une machine à vis comprenant une vis entraînée en rotation à l'intérieur d'un fourreau et constituée d'un arbre central d'entraînement sur lequel sont enfilés une pluralité d'éléments de vis séparés par un joint d'étanchéité et formant un empilage jointif calé entre une butée et un moyen de serrage exerçant sur l'empilage d'éléments de vis un effort de précontrainte susceptible de s'opposer au décollement en service desdits éléments de vis. Cet effort de précontrainte est effectué au moyen d'un ressort à rondelle mis sous pression par un écrou de serrage.

Mais ce moyen de serrage connu ne permet pas d'exercer sur les faces d'appui des éléments de vis une pression régulièrement répartie, ce qui provoque un matage desdites faces d'appui et interdit le retournement des éléments.

Conformément à l'invention le moyen de serrage comprend un vérin hydraulique constitué d'un piston et d'un corps cylindrique prenant appui l'un sur l'arbre central, l'autre sur l'empilage et un moyen de blocage mécanique du piston par rapport au corps après mise en précontrainte de l'empilage. Le vérin de serrage coprend préférablement, un écrou formant piston vissé sur un filetage correspondant de l'arbre central et sur lequel sont ménagées deux portées cylindriques de diamètres différents encadrant une portée annulaire et le long desquelles est monté coulissant le corps cylindrique, celui-ci étant muni intérieurement de deux portées cylindriques de diamètres internes égaux respectivement aux diamètres externes des portées de l'écrou et encadrant une portée annulaire opposée à celle de l'écrou; l'espace compris entre les deux portées annulaires forme une chambre de vérin femée par des joints d'étanchéité interposés entre les portées cylindriques de mêmes diamètres et qui est reliée à un moyen d'alimentation en fluide sous pression. Le moyen de blocage du piston par rapport au corps cylindrique est constitué par un écrou vissé sur l'une de ces deux pièces. En outre il peut être muni de moyens d'accrochage sur l'autre pièce s'opposant au coulissement de celles-ci après relachement de la pression du fluide.

Selon une autre caractéristique essentielle, les éléments filetés sont symétriques par rapport à un plan médian perpendiculaire à leur axe de telle sorte qu'après usage dans un sens, on peut les retourner pour les utiliser dans l'autre sens.

Mais l'invention sera mieux comprise par la description d'un mode de réalisation particulier, donné à titre d'exemple et représenté sur les dessins annexés.

La figure 1 est une vue de dessus schématique, en coupe longitudinale d'une machine à vis perfectionnée selon l'invention.

La figure 2 est une coupe transversale par un plan A de la figure 1.

La figure 3 est une vue de détail représenrant en coupe longitudinale, le moyen de serrage des éléments filetés.

La figure 4 est une vue de détail représentant la jonction de deux éléments adjacents.

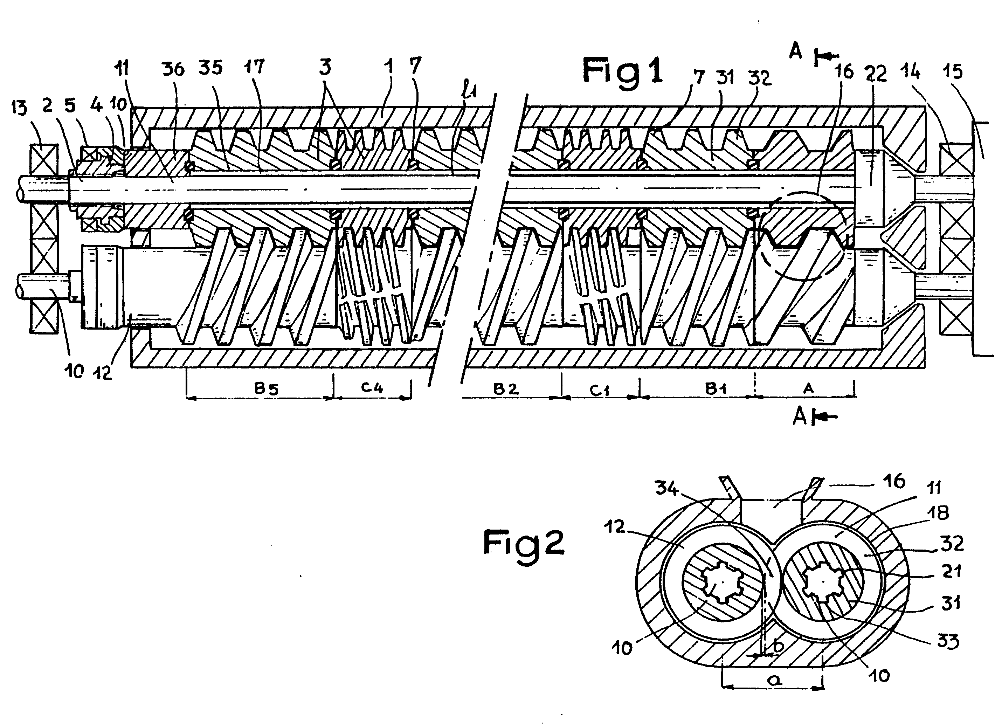

Sur la figure 1, on a représenté, on coupe longitudinale par un plan passant par les axes des vis, une machine comportant, à l'intérieur d'un fourreau 1, deux vis 11 et 12 à axes 10 parallèles, portées à leurs extrémités par des paliers 13 et 14.

Dans l'exemple représenté, les deux vis 11 et 12 sont entrainées en rotation dans le même sens par un groupe d'entrainement 15 et leurs filetages sont donc identiques. La matière, introduite par un orifice amont 16 centré dans le plan de symétrie du fourreau est entrainée vers l'aval par une section de convoyage A à pas large puis comprimée dans une section à pas resserré $B_1$ précédant une section de freinage $C_1$ qui peut être constituée par exemple de filets à pas inversé munis d'ouvertures de passage de la matière vers l'aval. Pour compenser cet effet de freinage, la matière est donc fortement comprimée dans ls section $B_1$. La matière se détend ensuite dans une section $B_2$ à pas direct puis se comprime de nouveau avant de passer dans une nouvelle section de freinage $C_2$, et ainsi de suite jusqu'à l'extrémité aval du fourreau munie d'un orifice de sortie 17.

Bien entendu, ce profil de vis n'est donné qu'à titre d'exemple, chaque application nécessitant un profil particulier. C'est pourquoi, pour pouvoir modifier à volonté le profil des vis, les filerages de pas différents sont ménagés sur des éléments juxtaposés, correspondant respectivement sux sections successives A, $B_1$ $C_1$, $B_2$, $C_2$ etc.

Chaque vis sera donc constituée, de façon classique, d'un arbre 2 sur lequel sont enfilés les une à la suite des autres des éléments 3 constituant ainsi un empilage. Chaque élément 3 comporte une partie centrale cylindrique 31, munie sur sa périphérie d'un ou plusieurs filets 32 enroulés en hélice selon un pas propre à l'élément.

Pour transmettre aux éléments le couple de rotation, l'arbre 2 est avantageusement muni de cannelures 21 qui s'engagent dans des rainures correspondantes 33 ménagées sur la paroi interne de la partie cylindrique 31 de l'élément.

Les deux vis engrènent l'une dans l'autre et sont donc placées dans deux lobes cylindriques sécants 18 de diamètre légèrement supérieur au diamètre extérieur des filets 32. L'entraxe (a) des vis est inférieur à leur diamètre, la différence étant un peu supérieure à la profondeur des filets, de telle sorte que la périphérie du filet d'une vis 11 est écartée du fond de filet de l'autre vis 12 par un jeu (b). Le profil des filets est tel que ceux-ci sont tangents l'un à l'autre dans la section d'engrènement 34 de façon à produire un effet de raclage.

Normalement, l'empilage jointif ainsi constitué est calé entre deux butées, une butée fixe 22 placée à une extrémité de l'arbre et une butée mobile placée à l'autre extrémité et constituée, généralement, par un écrou fileté intérieurement et vissé sur un filetage correspondant ménagé à l'extrémité de l'arbre 2. Comme on l'a indiqué, un tel écrou sert seulement à maintenir les éléments filetés sur l'arbre 2 mais n'est pas prévu pour exercer une pression de serrage très importante.

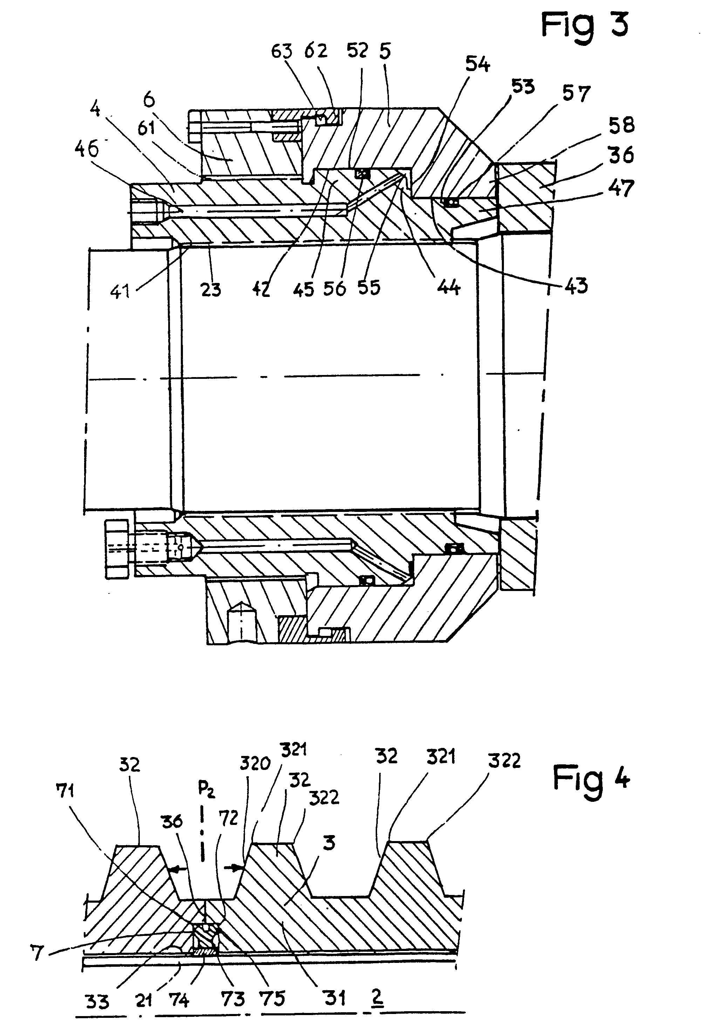

Selon la caractéristique essentielle de l'invention, ce moyen de serrage est constitué par un écrou hydromécanique 4, représenté en détail sur la figure 3 et qui peut exercer un véritable effort de précontrainte des éléments 3 susceptibles de s'opposer à leur décollement en service.

Comme on le voit sur la figure 3, l'écrou 4 est muni d'un filetage intérieur 41 qui peut se visser sur un filetage correspondant 23 ménagé à l'extrémité de l'arbre 2. Sur sa périphérie, l'écrou 4 est muni de deux portées cylindriques 42, 43 de diamètres différents encadrant une paroi annulaire 44 et définissant ainsi un piston annulaire 45; ce dernier est entouré par un manchon cylindrique 5 muni d'un alésage interne définissant deux portées cylindriques 52, 53 de diamètres égaux, respectivement, à ceux des portées 42 et 43 de l'écrou et qui encadrent une paroi annulaire 54 opposée à la paroi 44 de l'écrou 4. Le manchon 5 forme ainsi le corps d'un vérin hydraulique dont le piston est constitué par la partie 45 de l'écrou 4, celui-ci comportant un conduit 46 qui débouche dans la chambre 55 du vérin ménagée entre les parois annulaires 44 et 54, et peut être relié à un moyen d'alimentation en fluide sous pression. La chambre 55 du vérin peut ainsi être mise en pression, son étanchéité étant assurée par des joints 56, 57 interposés entre les portées cylindriques correspondantes 42, 52 et 43, 53.

De la sorte, après avoir enfilé les éléments filetés 3 l'un à la suite de l'autre sur l'arbre 2 pour former un empilage calé sur la butée fixe 22, on visse l'écrou 4 sur le filetage 23 jusqu'à venir en butée par son extrémité 47 sur le premier élément 35 de l'empilage, par exemple par l'intermédiaire d'un manchon 36 traversant, de façon étanche, l'extrémité du fourreau 1. On met alors en pression la chambre 55 du vérin et, l'écrou 4 étant bloqué, le corps cylindrique 5 se déplace du côté de l'empilage pour venir s'appuyer sur le manchon 36 par son extrémité 58. Les éléments de vis 3 sont donc soumis à une pression déterminant un effort de précontrainte qui peut être mesuré en contrôlant la pression d'alimentation du vérin.

Auparavant, on a pu déterminer l'effort de décollement des faces d'appui 37 (figure 4) des éléments filetés 3 qui est dû à la pression $P_1$ exercée par la matière sur les filets 32, principalement dans les zones C à pas inversés et auxquels s'ajoutent les contraintes liées à la flexion des arbres 2 des vis qui dépend de la flèche admise. On admet souvent que celle-ci peut aller jusqu'à trois fois le jeu radial (b) des vis mais l'invention permet précisément de la réduire. En effet, en soumettant les éléments filetés 3 à un effort de précontrainte, on fait travailler en compression les parties centrales 31 des éléments filetés et l'on modifie donc l'état d'équilibre en flexion de la vis.

On peut ainsi déterminer par le calcul l'effort de décollement des éléments filetés et par conséquent l'effort minimal de précontrainte qui doit lui être opposé et la pression du vérin correspondante. L'écrou hydromécanique qui vient d'être décrit permet d'obtenir des efforts de précontrainte très importants, de l'ordre de 20 tonnes, par exemple, pour des vis ayant un entraxe (a) de 200 mm.

Pour éviter de maintenir en permanence la pression du fluide hydraulique, l'écrou 4 est muni d'un moyen de blocage constitué par un écrou 6 vissé sur un filetage 61 ménagé sur la périphérie de l'écrou 4. Après avoir mis en pression le vérin, il suffit de tourner l'écrou de blocage 6 dans le sens voulu pour bloquer en position relative les deux parties 4 et 5 du vérin et par conséquent maintenir la précontrainte des éléments de vis. On peut alors supprimer la pression dans la chambre 55 du vérin. Par ailleurs, l'écrou 4 est muni d'une bague d'accrochage 62 s'engageant dans une gorge correspondante 63 ménagée sur la périphérie du corps 5 du vérin. Après desserrage du vérin, la bague 62 permet, par rotation de l'écrou 6, de ramener en contact les faces annulaires 44 et 54 du piston 4 et du corps 5 du vérin.

Selon une autre caractéristique de l'invention, les éléments filetés 3 sont séparés par des joints d'étanchéité 7 symétriques par rapport aux plans transversaux $P_2$ de jonction entre les éléments adjacents. A cet effet, les éléments 3 sont munis de deux demi-gorges 71, 72 ménagées respectivement à chaque extrémité de la paroi interne de la partie centrale 31 de l'élément 3 et qui, par accolement de deux éléments adjacents, forment une gorge symétrique par rapport au plan $P_2$ et dans laquelle peut être logé le joint d'étanchéité 7. La hauteur de la gorge et du joint doit être limitée pour que les faces d'appui 36 aient une section suffisante pour la transmission de l'effort de précontrainte, sans risque d'écrasement.

Selon une autre caractéristique avantageuse de l'invention, le joint d'étanchéité 7, comme on l'a représenté sur la figure 4 se compose d'une bague en matière élastique 73 accolée à un anneau métallique 74 dont le diamètre interne est égal au diamètre extérieur des cannelures 21 de l'arbre 2. De la sorte, la bague élastique 73 est bien maintenue au fond de la gorge 71, 72, l'épaisseur de l'anneau 74 étant supérieure au jeu existant entre les cannelures 21 de l'arbre 2 et les rainures correspondantes 33 des éléments de vis 3 de façon à éviter l'extrusion de la bague 73.

Le joint 7 est constitué avantageusement de deux lèvres symétriques par rapport au plan $P_2$ et qui s'appliquent sur les côtés latéraux des demi-gorges 71, 72 par des arêtes circulaires 75.

Les éléments filetés 3 sont donc symétriques par rapport à leurs plans médians et peuvent être retournés après usage dans un sens. En effet, dans les sections de convoyage $B_1$, par exemple, les filets 32 sont usés essentiellement sur leur face aval 320, notamment à l'angle du filet 321, l'angle amont 322 étant soumis à des efforts moins importants. Il en résulte une usure irrégulière du filet. Dans les dispositions précédentes, la flexion des vis provoquait un matage irrégulier des faces d'appui 36 qui interdisait le retournement des éléments. Grâce à la disposition selon l'invention, les faces d'appui 36 sont soumises à une pression régulièrement répartie, ce qui évite les risques de matage. On peut donc retourner les éléments filetés après usage dans un sens pour un nouvel usage dans un autre sens, ce qui double la durée de vie des éléments.

D'autre part, en interdisant pratiquement l'écartement des éléments filetés 3 même dans la partie centrale de la vis, on évite l'infiltrarion de matière dans les cannelures qui restent ainsi toujours propres.

L'invention est particulièrement avantageuse dans le cas qui vient d'être décrit, d'une machine à plusieurs vis portée par des paliers à leurs deux extrémités et par conséquent soumise à des flexions, mais elle reste intéressante pour les extrudeuses à une ou plusieurs vis ne comportant de paliers que du côté amont.

## Revendications

1. Machine à vis de traitement de matière comprenant au moins une vis (11) entraînée en rotation à l'intérieur d'un fourreau (1) et constituée d'un arbre central d'entraînement (2) sur lequel sont enfilés une pluralité d'éléments de vis (3) séparés par un joint d'étanchéité (7) et formant um empilage jointif calé entre une butée (22) et un moyen de serrage placés respectivement aux deux extrémités de l'arbre, ledit moyen de serrage étant agencé de façon à exercer sur l'empilage d'éléments de vis (3) un effort de précontrainte susceptible de s'opposer au decollement en service des éléments de vis (3) l'un par rapport a l'autre, caractérisée par le fait que le moyen de serrage comprend un vérin hydraulique (4, 5) constitué d'un piston (45) et d'un corps cylindrique (5) prenant appui, l'un sur l'arbre central (2), l'autre sur l'empilage (3) et un moyen (6) de blocage mécanique du piston (45) par rapport au corps (5) du vérin, après mise en précontrainte de l'empilage.

2. Machine de traitement selon la revendication 1, caractérisée par le fait que le vérin de serrage comprend un écrou (4) formant piston vissé sur un filetage correspondant (23) de l'arbre central (2) et sur lequel sont ménagées deux portées cylindriques (42, 43) de diamètres différents encadrant une paroi annulaire (44) et le long desquelles est monte coulissant le corps cylindrique (5) entourant le piston (4) et muni intérieurement de deux portées cylindriques (52, 53) de mêmes diamètres que les portées (42, 43) de l'écrou et encadrant une paroi annulaire (54) opposée à celle (44) du piston (4), l'ensemble limitant une chambre de vérin (55) fermée par des joints d'étanchéité (56, 57) interposés entre les portées cylindriques de même diamètre (42, 52) et (43, 53) et reliée à un moyen (46) d'alimentation en fluide sous pression et que le moyen de blocage du piston (4) par rapport au corps cylindrique (5) est un écrou (6) vissé sur l'une de ces deux pièces.

3. Machine de traitement selon la revendication 1 caractérisée par le fait que les éléments de vis (3) sont symétriques par rapport à un plan médian perpendiculaire à leur axe, de façon à pouvoir être retournés après usage dans un sens pour être utilisés dans l'autre sens.

4. Machine de traitement selon la revendication 1, dans laquelle les éléments de vis (3) sont munis intérieurement de rainures (33) s'engageant sur des cannelures correspondantes (21) de l'arbre central (2), caractérisée par le fait que chaque joint d'étanchéité (7) est constitué d'une bague (73) en matière élastique entourant un anneau métallique (74) de diamètre interne égal au diamètre périphérique des cannelures (21) de l'arbre (2) et d'épaisseur supérieure au jeu existant entre le sommet des cannelures (21) et le fond des rainures (33).

## Patentansprüche

1. Schneckenvorrichtung zum Behandeln von Material mit mindestens einer im Inneren einer Hülse (1) in Drehbewegung versetzten Schraube (11), die aus einer zentralen Antriebswelle (2) besteht, auf der mehrere Schraubenelemente (3) aufgereiht sind, die durch Dichtungen (7) voneinander getrennt sind und einen Stapel sich berührender Elemente zwischen einem Anschlag (22) und einem Klemmorgan bilden, die jeweils an den beiden Enden der Welle angeordnet sind, wobei das Klemmorgan so ausgebildet ist, daß es auf den Stapel der Schraubenelemente (3) eine Vorspannungskraft ausübt, die geeignet ist, dem Auseinanderlaufen der Schraubenelemente (3) während des Betriebs entgegenzuwirken, dadurch gekennzeichnet, daß das Klemmorgan eine hydraulische Kolbenzylindereinheit (4, 5) aufweist, die aus einem Kolben (45) und einem Zylinderkörper (5) besteht, der auf der mittleren Welle (2) ruht, wobei der Kolben auf dem Stapel (3) ruht und dadurch, daß ein mechanisches Blockierorgan (6) des Kolbens (45) relativ zum Körper (5) der Kolbenzylindereinheit vorgesehen ist, diese zu blockieren, nachdem der Stapel mit der Vorspannung beaufschlagt ist.

2. Schneckenvorrichtung nach Anspruch 1, dadurch gekennzeichnet, daß das Klemmorgan eine Schraubenmutter (4) aufweist, die einen Kolben bildet, der auf ein entsprechendes Gewinde (23) der mittleren Welle (2) aufgeschraubt ist und in den zwei zylinderförmige Lagerflächen (42, 43) mit unterschiedlichen Durchmessern eingearbeitet sind, die eine Ringwand (44) umschließen und entlang derer gleitend der Zylinderkörper (5) angeordnet ist, der den Kolben (4) umgibt und innen mit zwei zylinderförmigen Lagerflächen (52, 53) gleichen Durchmessers wie die Lagerflächen (42, 43) der Schraubenmutter versehen ist, die eine Ringwandung (54) gegenüber der (44) des Kolbens (4) umschließen, wobei die Gesamtheit eine Kolbenzylinderkammer (55) umgrenzen, die durch Dichtungen (56, 57) abgeschlossen ist, die zwischen den zylinderförmigen Lagerflächen gleichen Durchmessers (42, 52) und (43, 53) angeordnet sind und wobei die Kammer an eine Druckfluidspeisung (46) angeschlossen ist und dadurch, daß das Blockierorgan des Kolbens (4) bezüglich des Zylinderkörpers (5) eine Schraubenmutter (6) ist, die auf einem der beiden Teil verschraubt ist.

3. Schneckenvorrichtung nach Anspruch 1, dadurch gekennzeichnet, daß die Schraubenelemente (3) symmetrisch bezüglich einer Meridianebene sind, die senkrecht zu deren Achse verläuft, derart, daß sie nach Benutzung in einer Richtung umgedreht werden können um in der anderen Richtung benutzt werden zu können.

4. Schneckenvorrichtung nach Anspruch 1, bei der die Schraubenelemente (3) im Inneren mit Nuten (33) versehen sind, die auf entsprechenden Rippen (21) der Mittelwelle (2) eingreifen,

dadurch gekennzeichnet, daß jede Dichtung (7) aus einem Ring (73) aus elastischem Material besteht, das einen Metallring (74) mit einem inneren Durchmesser umgibt, der gleich dem Umfangsdurchmesser der Rippen (21) der Welle (2) ist und mit einer Dicke, die größer als das Spiel ist, das zwischen dem Kamm der Rippen (21) und dem Boden der Nuten (33) besteht.

**Claims**

1. A material-processing screw machine comprising at least one screw (11) inside the sleeve (1), means for driving the screw in rotation, the screw including a central driving shaft (2), a plurality of screw elements (3) mounted on the shaft and a sealing gasket (7) interposed between the screw elements, the screw elements (3) and gaskets (7) forming a stack of adjoining elements, an abutment (22) placed at one end of the shaft (2) and clamping means placed at an opposite end of the shaft, said clamping means being capable of exerting on the stack of elements (3) a pre-stressing force capable of opposing separation of the screw elements (3) from each other, characterised in that the clamping means comprising a hydraulic jack (4, 5) including two members consisting of a piston (45) and a cylindrical body (5), one of said two members bearing against the central shaft (2) and the other of said two members bearing against the stack (3), and means (6) for mechanically locking the piston (45) relative to the body (5) of the jack after the stack has been pre-stressed.

2. A machine according to claim 1, characterised in that the jack comprises a nut (4) forming a piston, a corresponding screw thread (23) on the central shaft (2) on which the nut (4) is screw-threadedly engaged, two cylindrical bearing surfaces (42, 43) which have different diameters provided on the nut (4), and an annular wall (44) disposed between the two bearing surfaces (42, 43), the cylindrical body (5) surrounding the piston (4) being provided internally with two cylindrical bearing surfaces (52, 53) which have the same diameters as the bearing surfaces (42, 43) of the nut and are slidably mounted on the bearing surfaces of the nut, an annular wall (54) confronting the annular wall (44) of the piston and disposed between the two bearing surfaces of the cylindrical body, the assembly of the cylindrical body (5) and the piston (4) defining a jack chamber (55) closed by sealing gaskets (56, 57) interposed between the cylindrical bearing surfaces having the same diameter (42, 52) and (43, 53), means (46) for supplying fluid under pressure being connected to the jack chamber, and the means for locking the piston (4) relative to the cylindrical body (5) being a nut (6) screwed on one of said two members.

3. A machine according to claim 1, characterised in that the screw elements (3) are symmetrical relative to a median plane perpendicular to an axis of the screw elements so as to be capable of being turned round after use in one direction for use in an opposite direction.

4. A machine according to claim 1, wherein the screw elements (3) are provided internally with corresponding grooves (33) engaged with the splines (21) of the central shaft (2) characterised in that each sealing gasket (7) comprising a ring (73) composed of an elastically yieldable material surrounding a metal ring (74) having an inside diameter equal to the outside diameter of the splines (21) of the shaft (2) and mounted on the splines and a thickness exceeding a clearance existing between crests of the splines (21) and bottoms of the grooves (33).

Fig 1

Fig 2

Fig 3

Fig 4